# EUROPEAN PATENT APPLICATION

(11) **EP 2 293 142 A1**
(43) Date of publication of application: **09.03.2011**
(21) Application number: 09754763.2
(22) Date of filing: 28.05.2009
(51) Int. Cl.: G02F 1/167

(54) **ELECTRONIC PAPER**

(30) Priority: 28.05.2008 JP 2008139477
(71) Applicant: Bridgestone Corporation, Tokyo 104-8340 (JP)
(72) Inventor: YAMAZAKI, Hirotaka, Kodaira-shi Tokyo 187-8531 (JP)
(74) Representative: Lloyd, Robin
(86) International application number: PCT/JP2009/059771
(87) International publication number: WO 2009/145255

(57) **Abstract**

An electronic paper includes two flexible substrates 1, 2 opposing each other, at least one of which is transparent; a partition wall 4 for sectioning a space between the two flexible substrates into a plurality of cells; and, a display medium consisting of a particle group and sealed in the plurality of cells, thereby to display information by electrically driving the display media, in which the partition wall is formed by a substrate-gap maintaining member 4-1 continuously disposed between the two flexible substrates, for securing a gap between the substrates, and, a sectioning member 4-2 discontinuously disposed between the two flexible substrates with a predetermined space. With this configuration, it is possible to obtain a panel structure body having flexibility, and provide an electronic paper having a uniform gap between the substrates and sufficient connecting strength.

## Description

### TECHNICAL FIELD

The present invention relates to an electronic paper comprising two flexible substrates facing each other, at least one of which is transparent, and, a partition wall for sectioning a space between the two flexible substrates into plural cells, characterized in that display media consisting of particles are sealed in the plural cells, and the display media are electrically driven to display information such as an image.

### BACKGROUND OF THE INVENTION

Conventionally, as an information display panel of a charged-particle movement type in which a particle group containing electrified particles are driven as display media, there is known an information display panel in which a space between substrates constituting a panel is sectioned by a partition wall; particles as display media are sealed in a small room (cell) surrounded by the partition wall; and, an electric field is applied between a pair of electrodes provided to the substrates to move the display media, thereby to display information such as an image. Further, in the information display panel of the charged-particle movement type, there is proposed a flexible information display panel (electronic paper) in which panel substrates thereof are made of a flexible material such as a resin.

Yet further, as the information display panel of the charged-particle movement type described above, there is known an information display panel configured such that partition walls are provided on respective substrates constituting a panel, and a height of an intersection point of the partition walls is made higher than the other portions, whereby a gap is formed in a part of the partition wall when the substrates constituting the panel are bonded together (see, for example, Japanese Patent Application Laid-open No. 2006-23541).

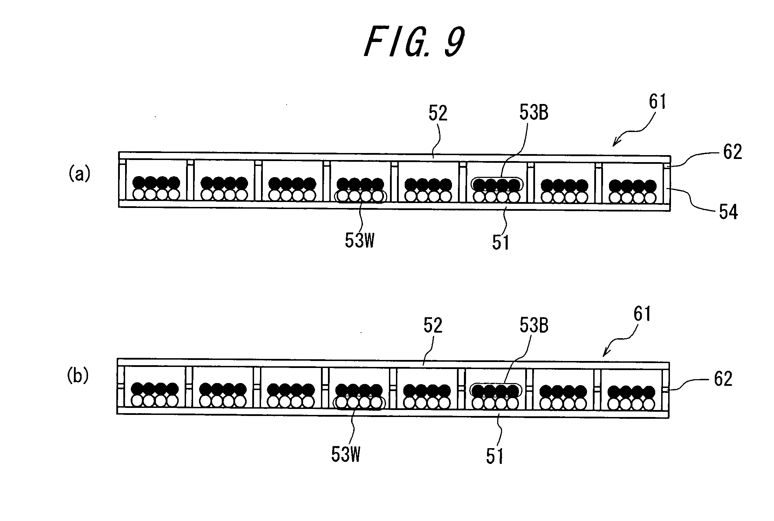

FIGS. 9(a) and 9(b) are diagrams for explaining examples of the conventional information display panel of the charged-particle movement type described above. In these examples, both substrates 51, 52 are made of a flexible material to form a flexible information display panel 61. Both of the substrates 51, 52 are bonded such that a top end portion of a partition wall 54 provided on one substrate 51 is connected to the other substrate 52 through an adhesive 62 in the example illustrated in FIG. 9(a), and, both top ends of partition walls 54-1, 54-2 provided on the substrates 51, 52, respectively, are connected with each other through the adhesive 62 in the example illustrated in FIG. 9(b). Therefore, the connection is made with the partition wall 54 forming cells 57 between both of the substrates 51, 52 as a whole, and hence, connecting portions are made dense, which makes it impossible to obtain sufficient flexibility. Note that 53W represents white color display media, and 53B represents black color display media.

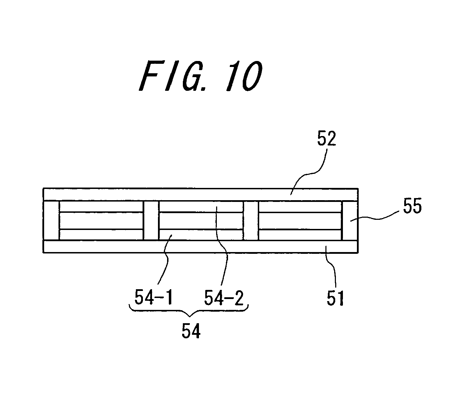

FIG. 10 is a diagram for explaining the other example of the conventional information display panel of the charged-particle movement type. In this example, partition walls 54 are formed such that a height of a portion 55 corresponding to an intersection point of the respective partition walls is higher than a height of the other portion; and by bonding substrates 51, 52 constituting a panel, a gap 63 is formed partly in each of the partition walls 54 (54-1, 54-2). However, the bonding connection between the substrates 51, 52 is made only at the top end portions of four corners 55 of the partition walls 54-1, 54-2 forming cells 57 between the substrates 51, 52. Therefore, it was impossible to maintain a uniform gap between the substrates, the sufficient connecting strength, and the sufficient flexibility since the connection portions are made dense.

### SUMMARY OF THE INVENTION

An object of the present invention is to solve the problems described above, and to provide an electronic paper capable of obtaining flexibility as a panel structure body, maintaining a uniform gap between substrates, and obtaining sufficient connecting strength.

According to the present invention, an electronic paper includs two flexible substrates opposing each other, at least one of which is transparent; a partition wall for sectioning a space between the two flexible substrates into a plurality of cells; and, a display medium consisting of a particle group and sealed in the plurality of cells, thereby to display information such as an image by electrically driving the display media, in which the partition wall is formed by a substrate-gap maintaining member continuously disposed between the two flexible substrates, for securing a gap between the substrates, and, a sectioning member discontinuously disposed between the two flexible substrates with a predetermined space.

Preferable examples of the electronic paper of the present invention include that the predetermined space is formed between the sectioning member and one substrate of the two opposing flexible substrates; the predetermined space is formed midway of the sectioning member; the predetermined space is less than or equal to an average particle diameter of the particle group constituting the display medium; the partition is arranged in a manner that quadrangle cells are arranged in a lattice shape; and, the partition is arranged at the inner side of the substrate-gap maintaining member for securing the gap between the substrates such that the minimum formation unit of the cells formed by the sectioning member is 2×4 or more, or 3×3 or more.

According to the present invention, it is possible to obtain an electronic paper having a flexible panel structure body that can make the most of flexibility of a substrate material constituting the panel, by forming a partition wall by a substrate-gap maintaining member disposed continuously between two flexible substrates, for securing a gap between the substrates, and a sectioning member disposed discontinuously between the two flexible substrates with a predetermined space. Further, it is possible to obtain an electronic paper having a flexible panel structure body capable of maintaining a gap between substrates of the panel to be constant and obtaining the sufficient connection strength, by dividing its function to a partition wall section formed by the substrate-gap maintaining member for securing the gap between the substrates and a partition wall section formed by the sectioning member for sectioning the other space between the substrates into the cells.

### BRIEF DESCRIPTION OF THE DRAWINGS

FIGS. 1(a) through 1(c) are diagrams illustrating an example of a panel structure body of an electronic paper according to the present invention;
FIGS. 2(a) through 2(c) are diagrams illustrating another example of a panel structure body of an electronic paper according to the present invention;
FIGS. 3(a) through 3(c) are diagrams illustrating still another example of a panel structure body of an electronic paper according to the present invention;
FIGS. 4(a) through 4(c) are diagrams illustrating still another example of a panel structure body of an electronic paper according to the present invention;
FIGS. 5(a) through 5(e) are diagrams illustrating still another example of a panel structure body of an electronic paper according to the present invention;
FIGS. 6(a) through 6(c) are diagrams for explaining an example of a method of manufacturing a panel structure body of an electronic paper according to the present invention;
FIGS. 7(a) through 7(c) are diagrams for explaining another example of a method of manufacturing a panel structure body of an electronic paper according to the present invention;
FIGS. 8(a) through 8(c) are diagrams for explaining other examples of a sectioning member for use in an electronic paper according to the present invention;
FIGS. 9(a) and 9(b) are diagrams for explaining an example of a conventional information display panel (electronic paper) of a charged-particle movement type; and,
FIG. 10 is a diagram for explaining another example of a conventional information display panel (electronic paper) of a charged-particle movement type;

### MODE FOR CARRYING OUT THE INVENTION

First, description will be made of a basic configuration of an information display panel of a charged-particle movement type, which is one example of an electronic paper according to the present invention. In the information display panel according to the present invention, an electric field is applied to display media sealed between two opposing substrates and consisting of particles containing electrified particles. The display media are attracted along a direction of the electric field by a force of the electric field, Coulomb's force or the like, and information display such as an image is performed by movements of the display media caused by change of directions of the electric field. Therefore, it is necessary to design the information display panel such that the display media can move uniformly while maintaining stability during repetitive rewrite of display or continuous display of the display information. Here, the force applied to the particles constituting the display media may be an attraction force due to Coulomb's force between the particles, an electric image force with respect to the electrodes or substrates, an intermolecular force, a liquid bonding force, gravity and the likes.

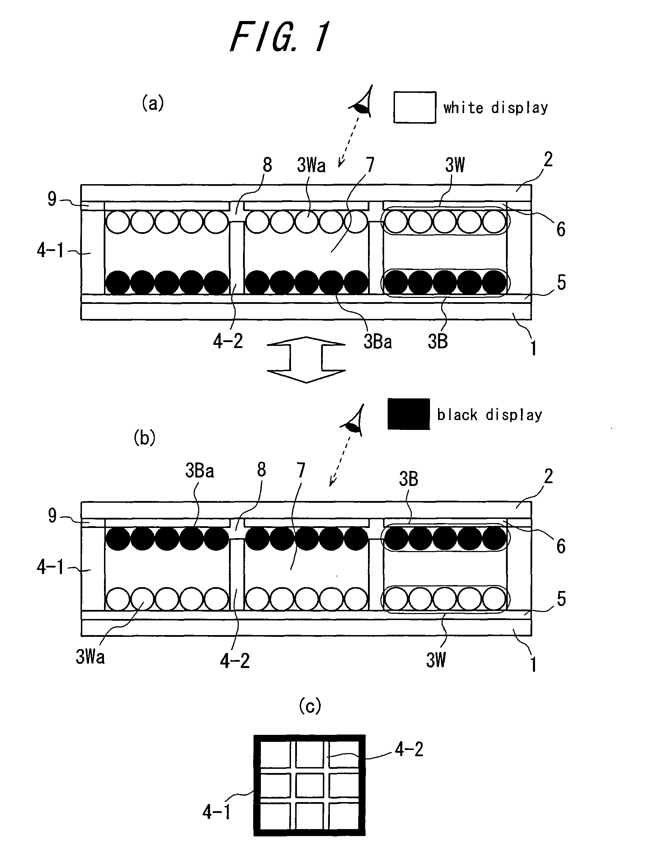

Hereinbelow, examples of the information display panel (electronic paper) of the charged-particle movement type will be described with reference to FIGS. 1(a)-(c) through FIGS. 5(a)-(c).
It should be noted that, in the following description, a substrate-gap maintaining member continuously disposed between two flexible substrates corresponds to a substrate-gap maintaining member formed so as to correspond to plural cells and having a height corresponding to a predetermined gap, for maintaining a predetermined gap. A sectioning member discontinuously disposed between the two flexible substrates at predetermined intervals corresponds to a sectioning member formed at a portion other than the substrate-gap maintaining member and connecting only with one of the two substrates for forming cells, thereby to form a gap between the substrates.

In an example illustrated in FIGS. 1(a) through 1(c), two or more types of display media (in this example, white color display media 3 W comprised of a particle group containing electrified white color particles 3Wa and black color display media 3B comprised of a particle group containing electrified black color particles 3Ba are illustrated) consisting of particle groups containing particles having at least an optical reflectivity and an electrification property, which are different between the display media types, are placed in each cell 7 sectioned in a lattice shape by a partition wall between substrates, and are moved perpendicular to substrates 1, 2 in accordance with an electric field generated by applying voltage across a pair of pixel electrodes formed such that an electrode 5 (line electrode) provided to the substrate 1 and an electrode 6 (line electrode) provided to the substrate 2 face each other and intersect perpendicularly. Then, a white dot display is performed so that an observer can visually recognize the white color display media 3W as illustrated in FIG. 1(a), or a black dot display is performed so that the observer can visually recognize the black color display media 3B as illustrated in FIG. 1(b). Note that, in FIGS. 1(a) and 1(b), a partition wall existing at the frontward side is omitted. The pair of opposing pixel electrodes may be formed by individual electrodes, or by pixel electrodes having TFT and a common electrode, rather than the line electrodes described above.

As exemplified in FIGS. 1(a) and 1(b), in which two partition walls (sectioning members) for forming the cells are provided between partition walls disposed as the substrate-gap maintaining member, this example is characterized in that a partition wall 4 is formed by (1) a substrate-gap maintaining member 4-1 formed so as to correspond to plural cells 7 (in this example, 3×3=9 cells 7 as illustrated in an overhead view of the panel of FIG. 1 (c)) and having a height corresponding to a desired gap between the substrates, for maintaining a gap between the substrates of the information display panel, and (2) a partition wall section (sectioning member for forming the cells) 4-2 formed at a portion other than the substrate-gap maintaining member 4-1 and having a gap 8 between the substrates 1, 2, for forming the cells 7 in the information display panel. Further, this example has a panel structure body in which: the substrate-gap maintaining member 4-1 is formed on the substrate 1 so as to have a height corresponding to a desired gap between the substrates; the sectioning member 4-2 having the gap 8, for sectioning the other space between the substrates into the cells 7, is formed so as to have a length less than or equal to that of the substrate-gap maintaining member 4-1; and, adhesive 9 is provided only between the substrate 2 and a top end of the substrate-gap maintaining member 4-1 to bond with the other substrate 2.

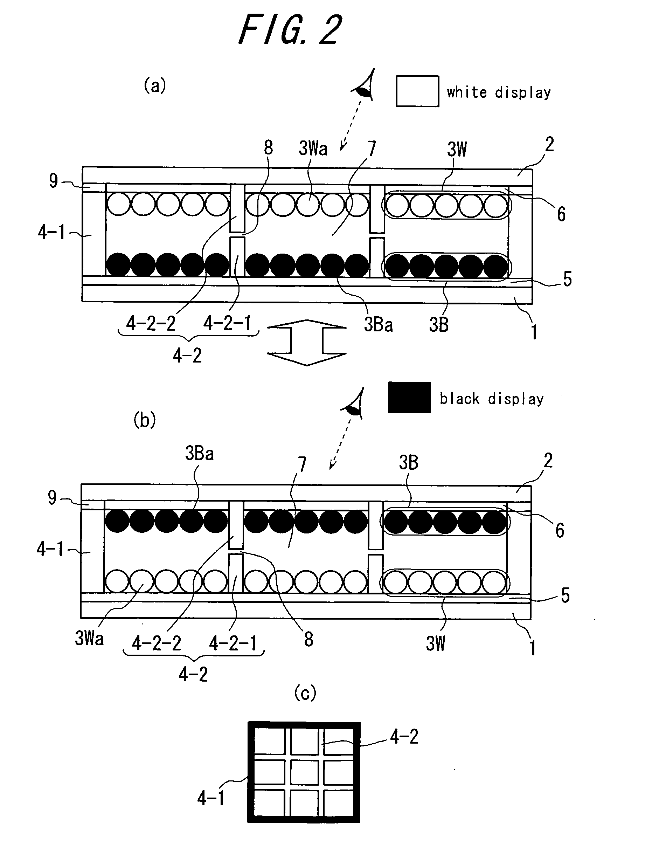

In an example illustrated in FIGS. 2(a) through 2(c), at least two or more types of display media (in this example, white color display media 3W comprised of a particle group containing electrified white color particles 3Wa and black color display media 3B comprised of a particle group containing electrified black color particles 3Ba are illustrated) consisting of particle groups containing particles having at least an optical reflectivity and an electrification property, which are different between the display media types, are placed in each cell 7 sectioned in a lattice shape by a partition wall between substrates, and are moved perpendicular to substrates 1, 2 in accordance with an electric field generated by applying voltage across a pair of pixel electrodes formed such that an electrode 5 (line electrode) provided to the substrate 1 and an electrode 6 (line electrode) provided to the substrate 2 face each other and intersect perpendicularly. Then, a white dot display is performed so that an observer can visually recognize the white color display media 3W as illustrated in FIG. 2(a), or a black dot display is performed so that the observer can visually recognize the black color display media 3B as illustrated in FIG. 2(b). Note that, in FIGS. 2(a) and 2(b), a partition wall existing at the frontward side is omitted. The pair of opposing pixel electrodes may be formed by individual electrodes, or by pixel electrodes having TFT and a common electrode, rather than the line electrodes described above.

As exemplified in FIGS. 2(a) and 2(b), in which two partition walls (sectioning members) for forming the cells are provided between partition walls disposed as the substrate-gap maintaining member, this example is characterized in that a partition wall 4 is formed by (1) a substrate-gap maintaining member 4-1 formed so as to correspond to plural cells 7 (in this example, 3×3=9 cells 7 as illustrated in an overhead view of the panel of FIG. 2(c)) and having a height corresponding to a desired gap between the substrates, for maintaining a gap between the substrates of the information display panel, and, (2) a partition wall section (sectioning member for forming the cells) 4-2 formed at a portion other than the substrate-gap maintaining member 4-1 and having a gap 8 between the substrates 1, 2, for forming the cells 7 in the information display panel. This example is an example in which the gap 8 is positioned in the vicinity of the center between the substrates. Further, this example has a panel structure body in which: the substrate-gap maintaining member 4-1 is formed on the substrate 1 so as to have a height corresponding to a desired gap between the substrates; the sectioning member 4-2 having the gap 8, for sectioning the other space between the substrates into the cells 7, is formed at a position where the sectioning members 4-2-1, 4-2-2 face the substrates 2, 1, respectively, and overlap each other, such that a total length of the sectioning members 4-2-1, 4-2-2 is less than or equal to the length of the substrate-gap maintaining member 4-1; and, adhesive 9 is provided only between the substrate 1 and a top end of the substrate-gap maintaining member 4-1 to bond with the other substrate 2.

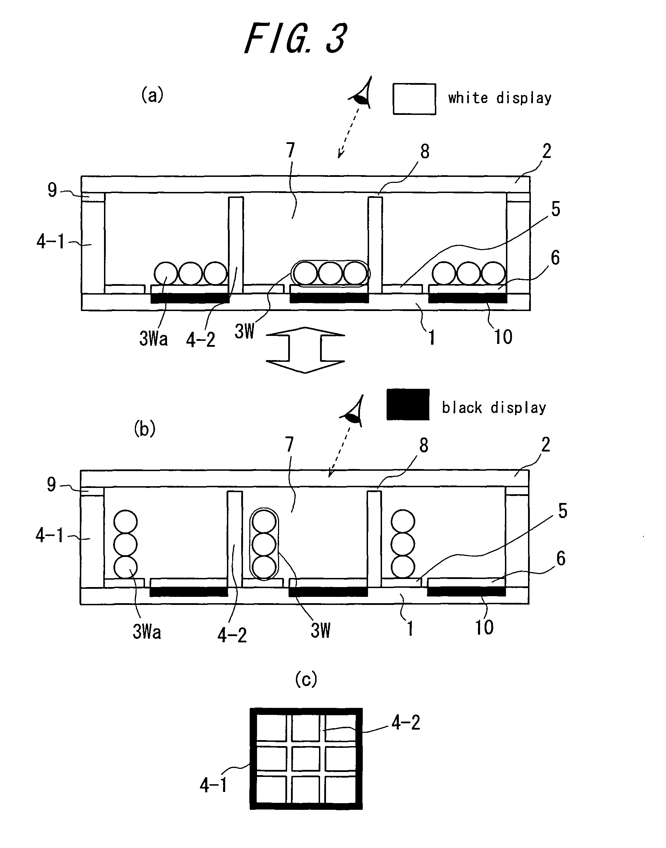

In an example illustrated in FIGS. 3(a) through 3(c), one type of display media (in this example, white color display media 3W comprised of a particle group containing electrified white color particles 3Wa is illustrated) consisting of a particle group containing particles having at least an optical reflectivity and an electrification property is moved substantially parallel to substrates 1, 2 in accordance with an electric field generated by applying voltage across electrodes 5, 6 provided to the substrate 1. Then, a white dot display is performed so that an observer can visually recognize the white color display media 3W, or a black dot display is performed so that the observer can visually recognize a color of a colored plate 10 (black color in this example) provided below a transparent electrode 6 of the substrate 1. It should be noted that, in the example illustrated in FIGS. 3(a) and 3(b), cells are formed by arranging partition walls 4 (4-1 and 4-2) in a lattice shape between the substrates 1, 2. In FIGS. 3(a) and 3(b), a partition wall existing at the frontward side is omitted.

As exemplified in FIGS. 3(a) and 3(b), in which two partition walls (sectioning member) for forming the cells are provided between partition walls disposed as the substrate-gap maintaining member, this example is characterized in that a partition wall 4 is formed by (1) a substrate-gap maintaining member 4-1 formed so as to correspond to plural cells 7 (in this example, 3×3=9 cells 7 as illustrated in an overhead view of the panel of FIG. 3(c)) and having a height corresponding to a desired gap between the substrates, for maintaining a gap between the substrates of the information display panel, and, (2) a partition wall section (sectioning member for forming the cells) 4-2 formed at a portion other than the substrate-gap maintaining member 4-1 and having a gap 8 with respect to the substrates 2, for forming the cells 7 in the information display panel. Further, this example has a panel structure body in which: the substrate-gap maintaining member 4-1 is formed on the substrate 1 so as to have a height corresponding to a desired gap between the substrates; the sectioning member 4-2 having a gap 8 and serving as a partition wall section for sectioning the other space between the substrates into the cells 7, is formed on the substrate 1 so as to have a height less than or equal to the length of the substrate-gap maintaining member 4-1; and, adhesive 9 is provided only between the substrate 2 and a top end of the substrate-gap maintaining member 4-1 to bond with the other substrate 2.

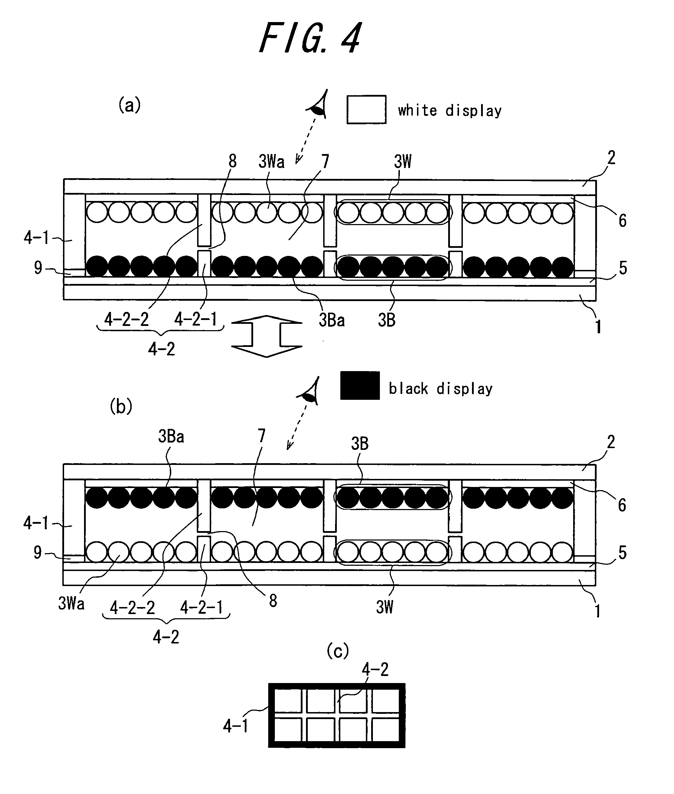

In an example illustrated in FIGS. 4(a) through 4(c), two or more types of display media (in this example, white color display media 3W comprised of a particle group containing electrified white color particles 3Wa and black color display media 3B comprised of a particle group containing electrified black color particles 3Ba are illustrated) consisting of particle groups containing particles having at least an optical reflectivity and an electrification property, which are different between the display media types, are placed in each cell 7 sectioned in a lattice shape by a partition wall between substrates, and are moved perpendicular to substrates 1, 2 in accordance with an electric field generated by applying voltage across a pair of pixel electrodes formed such that an electrode 5 (line electrode) provided to the substrate 1 and an electrode 6 (line electrode) provided to the substrate 2 face each other and intersect perpendicularly. Then, a white dot display is performed so that an observer can visually recognize the white color display media 3W as illustrated in FIG. 4(a), or a black dot display is performed so that the observer can visually recognize the black color display media 3B as illustrated in FIG. 4(b). Note that, in FIGS. 4(a) and 4(b), a partition wall existing at the frontward side is omitted. The pair of opposing pixel electrodes may be formed by individual electrodes, or by pixel electrodes having TFT and a common electrode, rather than the line electrodes described above.

As exemplified in FIGS. 4(a) and 4(b), in which 1×3 partition walls (sectioning members) for forming the cells are provided between partition walls disposed as the substrate-gap maintaining member, this example is characterized in that a partition wall 4 is formed by (1) a substrate-gap maintaining member 4-1 formed so as to correspond to plural cells 7 (in this example, 2×4=8 cells 7 as illustrated in an overhead view of the panel of FIG. 4(c)) and having a height corresponding to a desired gap between the substrates, for maintaining a gap between the substrates of the information display panel, and, (2) a partition wall section (sectioning member for forming the cells) 4-2 formed at a portion other than the substrate-gap maintaining member 4-1 and having a gap 8 between the substrates 1, 2, for forming the cells 7 in the information display panel. This example is an example in which the gap 8 is positioned close to the substrate 1 between the substrates. Further, this example has a panel structure body in which: the substrate-gap maintaining member 4-1 is formed on the substrate 2 so as to have a height corresponding to a desired gap between the substrates; the sectioning member 4-2 having a gap 8, for sectioning the other space between the substrates into the cells 7, is formed at a position where the sectioning members 4-2-1, 4-2-2 respectively face the substrates 2, 1 and overlap each other, such that a total length of the sectioning members 4-2-1, 4-2-2 is less than or equal to the length of the substrate-gap maintaining member 4-1; and, adhesive 9 is provided only between the substrate 1 and a top end of the substrate-gap maintaining member 4-1 to bond with the other substrate 1.

The gap 8 between the opposing sectioning members 4-2-1, 4-2-2 is preferably positioned in the vicinity of the center between the substrates. However, the gap 8 may be disposed in the vicinity of the rear surface side substrate 1, or on the contrary, may be disposed in the vicinity of the display surface side substrate 2, as illustrated in FIGS. 4(a) and 4(b). Further, the adhesion between the substrate and the substrate-gap maintaining member 4-1 is preferably performed on the rear surface side substrate 1 to avoid the adhesive 9 obstructing the visibility.

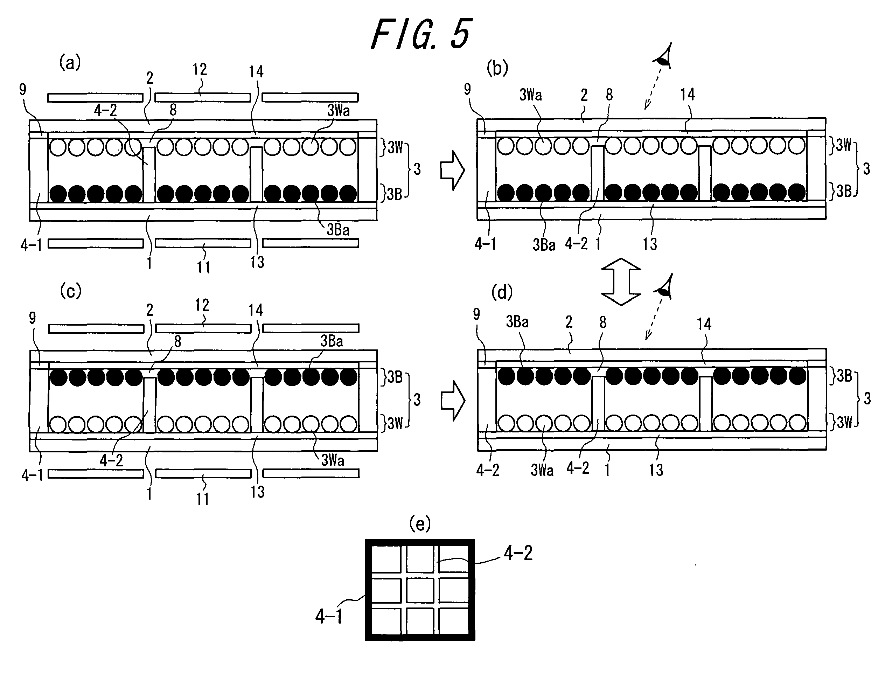

In an example illustrated in FIGS. 5(a) through 5(d), first, at least two types of display media (in this example, white color display media 3W comprised of a particle group containing electrified white color particles 3Wa and black color display media 3B comprised of a particle group containing electrified black color particles 3Ba are illustrated) consisting of particle groups containing particles having an optical reflectivity and an electrification property, which are different between the display media types, are placed in each cell 7 sectioned in a lattice shape by a partition wall between substrates, and are moved perpendicular to substrates 1, 2 in accordance with an electric field generated by applying voltage across an external electric field forming means 11 provided at the outside of the substrate 1 and an external electric field forming means 12 provided at the outside of the substrate 2, as illustrated in FIGS. 5(a) and 5(c). Then, a white dot display is performed so that an observer can visually recognize the white color display media 3W as illustrated in FIG. 5(b), or a black dot display is performed so that the observer can visually recognize the black color display media 3B as illustrated in FIG. 5(d). Note that, in FIGS. 5(a) through 5(d), a partition wall existing at the frontward side is omitted. A conductive film 13 is provided inside of the substrate 1, and a transparent conductive film 14 is provided inside of the substrate 2. The conductive layer 13 provided inside of the substrate may be either transparent or not transparent. Alternatively, it is possible not to provide this conductive film.

As exemplified in FIGS. 5(a) and 5(b), in which two partition walls (sectioning members) for forming the cells are provided between partition walls disposed as the substrate-gap maintaining member, this example is characterized in that a partition wall 4 is formed by (1) a substrate-gap maintaining member 4-1 formed so as to correspond to plural cells 7 (in this example, 3×3=9 cells 7 as illustrated in an overhead view of the panel of FIG. 5(e)) and having a height corresponding to a desired gap between the substrates, for maintaining a gap between the substrates of the information display panel, and, (2) a partition wall section (sectioning member for forming the cells) 4-2 formed at a portion other than the substrate-gap maintaining member 4-1 and having a gap 8 with respect to the substrate 2, for forming the cells 7 in the information display panel. Further, this example has a panel structure body in which: the substrate-gap maintaining member 4-1 is formed on the substrate 2 so as to have a height corresponding to a desired gap between the substrates; the sectioning member 4-2 having the gap 8 and serving as a partition wall section for sectioning the other space between the substrates into the cells 7, is formed on the substrate 1 so as to have a height less than or equal to the length of the substrate-gap maintaining member 4-1; and, adhesive 9 is provided only between the substrate 2 and a top end of the substrate-gap maintaining member 4-1 to bond with the other substrate 1.

In the examples described above, a non-connecting portion between the two substrates 1, 2 is obtained by forming the gap 8 between the sectioning members 4-2-1, 4-2-2 for sectioning the space between the substrates into the cells 7, or the gap 8 between the sectioning member 4-2 and the substrate 1 or 2, other than by using the substrate-gap maintaining member 4-1 provided for maintaining the gap between the substrates, and the minimum unit for the non-connecting portion is set preferably at 2×4 or more or 3×3 or more in the lattice-shaped arrangement of the cells, so that the panel structure body can easily obtain the flexibility.

In the information display panel of a type in which the display media consisting of particle groups are reversely moved between the opposing substrates 1, 2 in the perpendicular direction, it is preferable that the non-connecting portion (gap 8) between the two substrates formed by the partition wall section (sectioning member for forming the cells) 4-2 for sectioning the space between the substrates into the cells 7, other than by the the substrate-gap maintaining member 4-1, is formed between the sectioning members 4-2-1 and 4-2-2, in particular, in the vicinity of the center between the substrates as illustrated, for example, in FIGS. 2(a) through 2(c). This is because, in a case where the gap 8 exists at a portion close to a starting point of the reverse movement of the particles between the sectioning member 4-2 and the substrate 1 or 2, the particles move through the gap 8 into the adjacent cell 7 at the time of movement of the particles, and, variation occurs in the arrangement distribution of the group of particles constituting the display media in the entire screen, which is likely to lead to reduction in quality of the displayed image.

It is preferable for the gap 8 of the sectioning member 4-2 described above to be less than or equal to an average particle diameter of the group of particles constituting the display media. This makes it possible to sufficiently prevent the particles constituting the display media from moving into the adjacent cell 7, and at the same time, to maintain the flexibility of the information display panel (panel structure body) by forming the non-connecting portion (providing the gap8, even if small) between the two substrates.

Although the substrate-gap maintaining member 4-1 and the partition wall section (sectioning member for forming the cells) 4-2 for sectioning the other space between the substrates into cells 7 are arranged in the lattice shape, the cross-sectional shape of the cells 7 may be a polygon such as a quadrangle, triangle and hexagon, a circle, an oval, a racetrack shape or the like, and it is possible to combine plural shapes. The quadrangle is preferable considering that an open area ratio can be larger, and a shape having a curve is preferable considering that the particles constituting the display media can easily move. From the considerations described above, a comer-rounded quadrangle is preferably used.

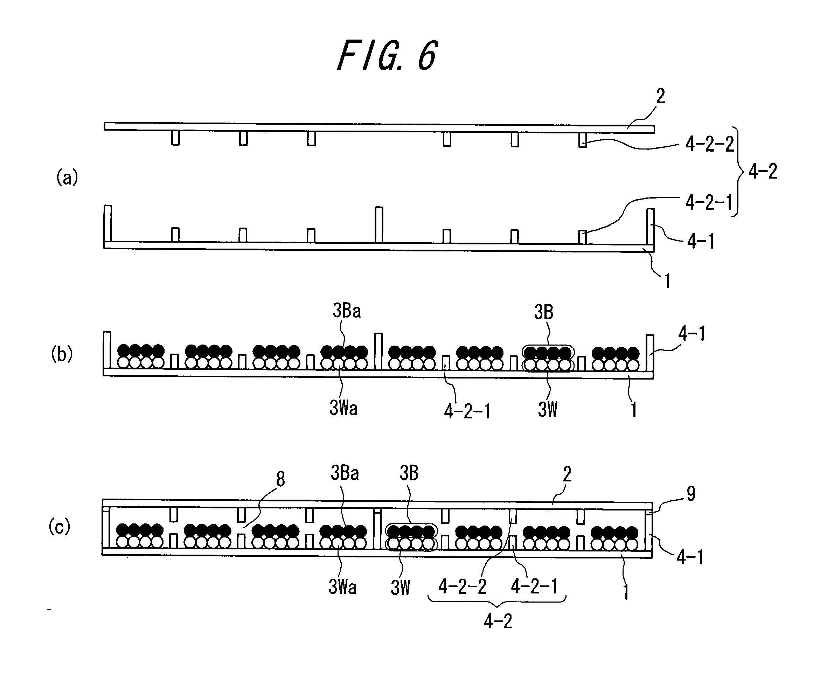

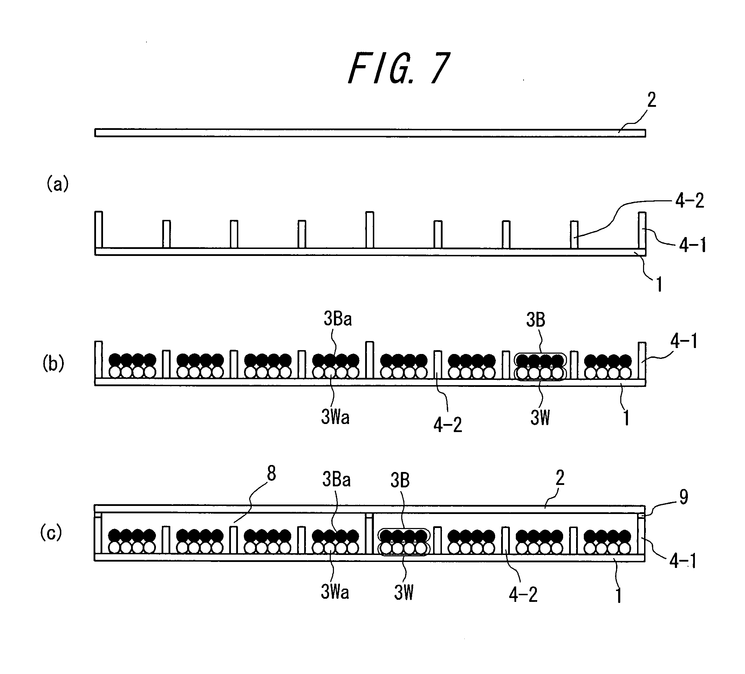

FIGS. 6(a) through 6(c) and FIGS. 7(a) through 7(c) are diagrams for explaining one example of a method of manufacturing an information display panel (electronic paper) according to the present invention. In the examples illustrated in FIGS. 6(a) through 6(c) and FIGS. 7(a) through 7(c), a display surface side substrate 2 is a transparent, flexible substrate, and a rear surface side substrate 1 does not have to be transparent provided that it has flexibility. Further, the display surface side substrate and the rear surface side substrate may have configurations opposite to those illustrated in FIGS. 6(a) through 6(c) and FIGS. 7(a) through 7(c).

In the example illustrated in FIGS. 6(a) through 6(c), a display surface side substrate 2 and a rear surface side substrate 1 are prepared as illustrated in FIG. 6(a) such that a sectioning member 4-2-1 and a sectioning member 4-2-2 forming a sectioning member 4-2 having a gap 8 are provided to both a flexible display surface side substrate 2 and a flexible rear surface side substrate 1, so as to face each other, and, the substrate-gap maintaining member 4-1 is provided on the rear surface side substrate 1. Then, as illustrated in FIG. 6(b), black color display media 3B and white color display media 3 W are placed one by one to corresponding portions in cells of the rear surface side substrate 1. Finally, as illustrated in FIG. 6(c), adhesive 9 is provided on a top end portion of the substrate-gap maintaining member 4-1, and the two substrates 1, 2 are bonded with the adhesive 9, whereby the electronic paper according to the present invention can be obtained. In this example, the black color display media 3B consist of a particle group (average particle diameter: 8.8 µm) containing positively charged black color particles 3Ba; the white color display media 3 W consist of a particle group (average particle diameter: 9.0 µm) containing negatively charged white color particles 3 Wa; and, a gap 8 of 5 µm is provided in the vicinity of the center of a space between the substrates in the sectioning member 4-2.

In the example illustrated in FIGS. 7(a) through 7(c), a flexible display surface side substrate 2 and a flexible rear surface side substrate 1 having a substrate-gap maintaining member 4-1 and a sectioning member 4-2 having a height less than or equal to that of the substrate-gap maintaining member 4-1 are prepared as illustrated in FIG. 7(a). Then, as illustrated in FIG. 7(b), black color display media 3B and white color display media 3W are placed one by one to corresponding portions in cells of the rear surface side substrate 1. Finally, as illustrated in FIG. 7(c), adhesive 9 is provided on a top end portion of the substrate-gap maintaining member 4-1, and the two substrates 1, 2 are bonded with the adhesive 9, whereby the electronic paper according to the present invention can be obtained. In this example, the black color display media 3B consist of a particle group (average particle diameter: 8.8 µm) containing positively charged black color particles 3Ba; the white color display media 3W consist of a particle group (average particle diameter: 9.0 µm) containing negatively charged white color particles 3Wa; and, a gap 8 of 7 µm is provided between the sectioning member 4-2 and the display surface side substrate 2.

Hereinbelow, materials of each part constituting the electronic paper according to the present invention and the like will be described further in detail.

As a material forming the substrate-gap maintaining member 4-1 and the sectioning member 4-2, a dry film resist is preferably used. For example, ALPHO NIT2 (product ofNichigo-Morton Co., Ltd.) or PDF 300 (product of Nippon Steel Chemical Group) can be used.

After the dry film resist having a thickness corresponding to a desired height of a partition wall is laminated on each substrate constituting the substrate-gap maintaining member 4-1 and the sectioning member 4-2, unnecessary portion is removed by a photolithography method, whereby the partition wall section can be formed. The substrate-gap maintaining member 4-1 and the sectioning member 4-2 can be formed either by using the same dry film resist, or by using different dry film resists.

A pigment can be mixed into the dry film resist to make the partition wall have a desired color. The substrate-gap maintaining member 4-1 and the sectioning member 4-2 can be formed either by using the dry film resists having the same color pigment mixed thereinto, or by using the dry film resists each having different color pigments mixed thereinto, so as to make the respective members have different colors.

A material for forming an electrode or conductive film provided to the substrate includes transparent conductive metal oxides such as indium tin oxide (ITO), indium oxide, zinc-doped indium oxide (IZO), aluminum-doped zinc oxide (AZO), antimony tin oxide (ATO), conductive tin oxide and conductive zinc oxide, conductive high-polymer molecules such as polyaniline, polypyrrole, polythiophene, metals such as gold, silver, copper, aluminum, nickel, chromium, and alloys having these metals as the main elements, depending on requirements. Of these materials, a transparent material having favorable optical transparency is necessary to be used for the display surface side substrate, but the electrode provided to the rear surface side substrate may be either transparent or not-transparent.

The electrode and the conductive film can be formed by shaping the material described above as examples into a thin film by using a sputtering method, vacuum evaporation method, CVD (chemical vapor deposition) method, coating method or the like, by laminating a metal foil (for example, rolled copper foil), or by mixing a conductive agent with solvent or synthetic resin binder and then applying it. The material capable of pattern forming and having conductivity can be preferably used. Note that it is only necessary for the thicknesses of the electrode and the conductive film on the display surface side to secure the conductivity and have sufficient optical transparency, and the thicknesses thereof are preferably 0.01-10 µm, and are more preferably 0.05-5 µm. Further, it is only necessary for the thicknesses of the electrode and the conductive film on the rear surface side to secure the conductivity, and the thicknesses thereof are preferably 0.01-10 µm, and are more preferably 0.05-5 µm.

A transparent metal oxide-based material such as ITO preferable as the display surface side electrode is less flexible as compared with the metal materials, and hence, it is preferable for the transparent metal oxide-based material to be used with a metal thin wire in order to prevent the material from breaking in the transparent electrode material. It is preferable for a width of the metal thin wire to be 1 µm to 10 µm to avoid the metal wire obstructing the visibility of the display. For the rear surface side electrode, it is not necessary to take the optical transparency into consideration, and hence, the metal material described above having low electric resistance and excellent flexibility is preferably used. Further, a thickness of the rear surface side electrode is designed to be 0.1-10 µm in terms of electrical resistance, productivity and cost.

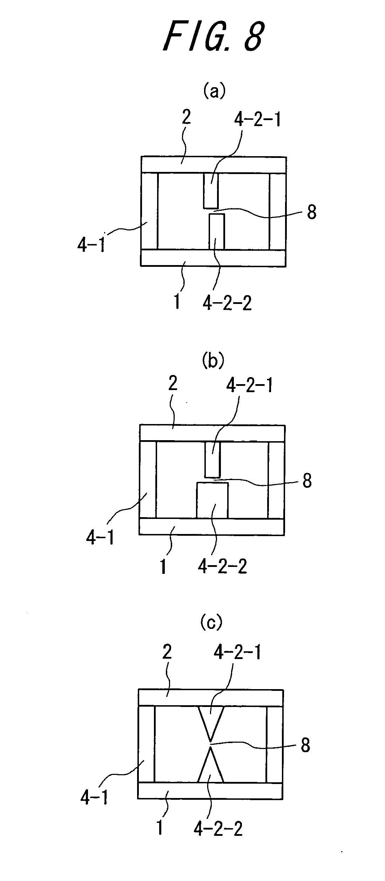

It should be noted that, in the above-described examples, the gap 8 is manufactured such that the top end portion of the sectioning member 4-2-1 and the top end portion of the sectioning member 4-2-2 face each other and are matched with no positional shift. However, the sectioning member used in the electronic paper according to the present invention may be shaped differently. FIGS. 8(a) through 8(c) are diagrams for explaining the other examples of the sectioning member used in the electronic paper according to the present invention. The sectioning member 4-2-1 and the sectioning member 4-2-2 may be arranged so as to face each other with a slight positional shift, as illustrated in FIG. 8(a); the widths of the sectioning member 4-2-1 and the sectioning member 4-2-2 may be differently formed to form the gap 8 as illustrated in FIG. 8(b); or it may be possible to form the sectioning member 4-2-1 and the sectioning member 4-2-2 by members having a triangle cross-section whose size gradually decreases from the respective substrates 1, 2 sides, and, form the gap 8 between the top end portions of the sectioning member 4-2-1 and the sectioning member 4-2-2, as illustrated in FIG. 8(c).

### Industrial Applicability

The electronic paper according to the present invention is used preferably as an electronic paper used by being connected with a mobile device such as a portable information device called a notebook computer, electronic organizer or PDA (personal digital assistants), a cell phone and handy terminal; an electronic paper used as an electronic book, electronic newspaper and the like; an electronic paper used as a message board such as a billboard, poster, and blackboard (whiteboard); an RFID type electronic paper such as a point card, IC card, electronic advertisement, information board, electronic POP (point of presence, point of purchase advertizing), electronic price tag, electronic price shelf-tag, and electronic music score; an electronic paper that rewrites displays by connecting with an output terminal of various electronic devices or external rewriting means such as a POS terminal and automotive navigation system; and a rewritable electronic paper that rewrites displays by using the external rewriting means.

In addition to the particle group containing the electrified particles described above, various types of particle groups such as a particle group containing conductive particles and a particle group containing semiconductive particles may be used for the display media used for the electronic paper according to the present invention. As a method of driving the electronic paper according to the present invention, various types of drive methods can be applied such as a simple matrix drive type or a static drive type in which no switching element is used in the panel itself, an active matrix drive type using a three-terminal switching element represented by a thin-film transistor (TFT) or two-terminal switching element represented by a thin-film diode (TFD), and, a driving type using an external electric field forming means.

## Claims

1. An electronic paper, comprising:
two flexible substrates opposing each other, at least one of which is transparent;
a partition wall for sectioning a space between the two flexible substrates into a plurality of cells; and,
a display medium consisting of a particle group and sealed in the plurality of cells, thereby to display information by electrically driving the display media, wherein
the partition wall is formed by a substrate-gap maintaining member continuously disposed between the two flexible substrates, for securing a gap between the substrates, and, a sectioning member discontinuously disposed between the two flexible substrates with a predetermined space.

2. The electronic paper according to claim 1, wherein
the predetermined space is formed between the sectioning member and one substrate of the two opposing flexible substrates.

3. The electronic paper according to claim 1, wherein
the predetermined space is formed midway of the sectioning member.

4. The electronic paper according to any one of claims 1-3, wherein
the predetermined space is less than or equal to an average particle diameter of the particle group constituting the display medium..

5. The electronic paper according to any one of claims 1-4, wherein
the partition is arranged in a manner that quadrangle cells are arranged in a lattice shape.

6. The electronic paper according to any one of claims 5, wherein
the partition is arranged at the inner side of the substrate-gap maintaining member for securing the gap between the substrates such that the minimum formation unit of the cells formed by the sectioning member is 2×4 or more, or 3×3 or more.
